# EUROPEAN PATENT SPECIFICATION

(11) **EP 1 325 608 B1**
(45) Date of publication and mention of the grant of the patent: **23.05.2007**
(21) Application number: 01972365.9
(22) Date of filing: 09.10.2001
(51) Int. Cl.: H04M 3/42, H04M 3/533

(54) **TELEPHONE CONVERSATION RECORDING APPARATUS**
FERNSPRECHAUFZEICHNUNGSGERÄT
APPAREIL D'ENREGISTREMENT DE CONVERSATIONS TELEPHONIQUES

(30) Priority: 09.10.2000 GB 0024733
(43) Date of publication of application: 09.07.2003
(73) Proprietor: INTELLPROP LIMITED, Guernsey, Channel Islands (GB)
(72) Inventor: WILSON, Jeffrey, Fareham, Hampshire PO16 7OH (GB)
(74) Representative: Pilch, Adam John Michael
(86) International application number: PCT/GB2001/004499
(87) International publication number: WO 2002/032092

(56) References cited:
- EP-A- 0 688 126
- WO-A-98/39901
- US-A- 5 544 231

## Description

This invention relates to telecommunications apparatus, and in particular to such apparatus for establishing telecommunications calls upon receiving call requests.

Written communications in various forms can be copied, sent to other people and filed for future reference. However telephone conversations are normally transient events with the detail of any discussions at the mercy of people's memories, which sometimes do not coincide, especially after the passage of time.

People sometimes make written notes during telephone calls but this activity can distract from one's ability to concentrate on the conversation and in any event the notes do not necessarily contain all of the information that may be required later - they tend to provide some indication of what the other person may have said but not necessarily what the writer said. Nor can they easily capture the emotional content of the conversation or particular points of discussion.

With ever increasing use of the telephone, the ability to record, save and later refer to telephone conversations may be highly desirable in many circumstances. For example:
business users may wish to record conversations with customers or suppliers, either to keep as a file copy or to play to colleagues;
business users may wish to disseminate information in telephone conversations with colleagues to other people in the organisation;
mobile users are not always in a position to make notes during important conversations, particularly in the car. The ability to refer back to the conversation later would make it easier to have detailed discussions, make decisions, etc. in these circumstances;
private users may wish to record conversations with travel agents, estate agents, etc. in case of subsequent dispute;
it may be desired to record conversations with family members, particularly announcing special or momentous events, both for reply to other family members and to keep for sentimental reasons.

The difficulty in recording telephone conversations, particularly with a mobile handset, is that there are two separate audio paths - to and from the handset - and to obtain a representative recording it is necessary to add the two channels. This summation is not available within the handset and handsets do not provide external outputs with these signals.

At present, telephony equipment is readily available to record one side of a telephone call; for example, answering machines and voicemail systems record messages from callers.

Telephone conversations are routinely recorded by financial institutions to provide evidence of the particular transaction which has taken place. This is to protect the financial institution and also to some extent the customer. The audio recording can provide evidence of what was actually said. Similarly, call centres and telemarketing organisations may record calls, particularly for quality control and training purposes. However, these are expensive installations, and not normally available to individuals or other sectors of society.

A telephone user who wished to record a call may be able to use some form of equipment, probably acoustically coupled to the handset, bat the quality of recording is likely to be fairly low. Furthemore, it is likely to be difficult to manage such records, which are probably on tape - they would probably need to be transferred to a digital medium for storage and distribution to other parties.

It is not unusual when making a telephone call to insert a prefix before the destination number, for example, in the UK, a dialled number may be preceded by the digits '141' if the caller wishes to inhibit the CLI being passed to the destination. Also in the UK, and other countries, a four digit code may prefix the destination number to identify the network operator that the caller wishes to use for the call. In such cases the operator providing the local loop to the caller routes the call to the requested carrier at a convenient point.

US-A-5 544 231 discloses a key phone system in a self-contained apparatus such as a private exchange. In order to selectively record telephone conversations, the apparatus monitors all of its active connections for recording requests.

WO 98/39901 discloses a telephone call transcriptions system in which, again, every subscriber line that might require recording needs monitoring for recording requests.

According to the invention there is provided a telecommunications apparatus for use in a telephone network and operable to establish telecommunications calls between telecommunications terminals connected to said apparatus via the telephone network in response to call requests received from said terminals, said apparatus comprising
a control processor operable in response to a call recording request and a terminal identifier received from a calling telecommunications terminal via the telephone network, to establish a telecommunications call over the telephone network between said calling terminal and a called telecommunications terminal identified by said terminal identifier received with said call recording request,
a combiner arranged to receive and to combine telecommunications signals from said calling terminal and telecommunications signals from said called terminal, and
a recording apparatus operable to record said combined telecommunications signals.

Call recording may be required in two situations; firstly when a subscriber originales a call (the subscriber is the caller) and, secondly, when a subscriber receives a call (the subscriber is the called party). Embodiments of the invention address the situation in which the subscriber is the caller and provide a simple, cost-effective means of providing high quality recordings of telephone conversations.

The invention will now be described by way of example with reference to the accompanying drawings, throughout which like parts are referred to by like references, and in which:
Figure 1 is a system schematic block diagram of a telephone call recording system according to an embodiment of the invention;
Figure 2 is a more detailed block diagram of the telephone call recording system;
Figure 3 shows the configuration of the system of Figure 2 moms call recording
Figure 4 is a block diagram of a system implementation including audio recording and delivery; and
Figure 5 is a users' database which may be included in the system.

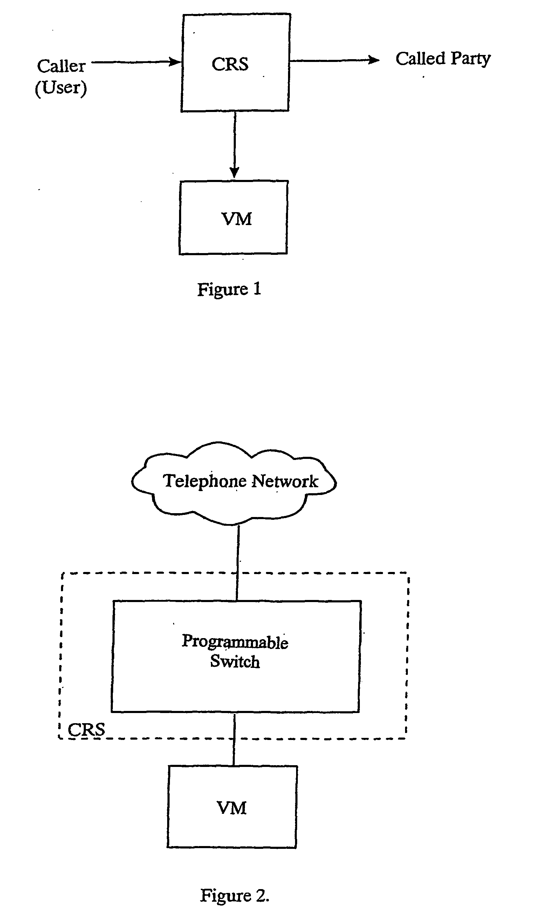

One embodiment of a telephone call recording system is shown in Figure 1. The telephone call recording system CRS has input and output connections to the telephone network, allowing access for a caller (user) and to a called party, and an output connection to a voicemail system VM.

When the user wishes to record a telephone call, the destination number is prefixed with the appropriate code, which causes the telephone network to route the call to the call recording system CRS. CRS outdials via the telephone network to the destination, and at the same time dials out to an external recording system, such as the voicemail system VM. To ensure that the called party or system is aware of who is calling, the CRS establishes the outdialled call of the destination or service with the CLI (Calling Line Identity) of the caller.

Within CRS, the two audio paths (transmit and receive) between the user and the destination are monitored and fed into a summation function, the output of which is fed to VM.

A preferred embodiment of the call recording system (CRS) is shown in Figure 2.

As shown in Figure 2, CRS connects between the telephone network and the voicemail system VM. The voicemail system may be a new equipment installed specially to support this new service or it may be existing equipment providing a standard voicemail service. A key benefit of the system is that a basic service can be provided merely by inserting CRS in front of an existing voicemail system - no modifications are required to either the telephone network or the voicemail system.

CRS may comprise a programmable switch, such as the Ocean fastSSP (service switching point) programmable switch incorporating summation functionality, as manufactured by Telsis Limited.

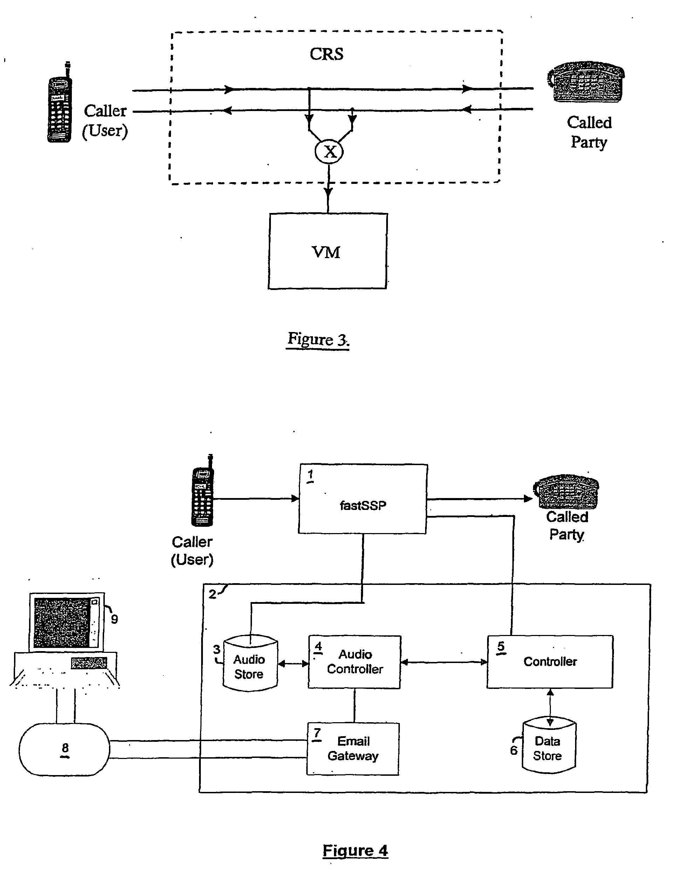

Figure 3 shows the CRS configuration for audio paths during call recording. In this figure, the user (caller) is shown as being on the mobile network and the called party is shown as being on the fixed network; however the system could work with any combination of fixed and mobile phones.

In Figure 3, the call from the user is automatically routed by the network, based on the prefix, to the CRS, such as the fastSSP, where it is onward routed to the destination (with the prefix automatically removed by the CRS). The CRS simultaneously sets up a separate call to the VM. The two audio paths (transmit and receive) between the calling and called parties are fed into a summation function within the CRS, with the output being fed to the VM.

The VM must be told who the message (recorded conversation) is for, i.e. in which mailbox it should be deposited. This may be done in a variety of ways and will depend upon the signalling capabilities and operation of the VM. In one implementation, the CRS uses the CLI of the user as the access number for the VM; in another implementation the same CLI is used but with the prefix automatically inserted by the CRS to indicate that it is a transferred call; in another implementation a common VM access number is dialled with the user's CLI placed in a field within the signalling data, such as 'C-number' or 'Re-directing number'.

At the end of the call, the recording of the conversation is available within the VM for replay over the telephone network to the user. An advanced voicemail system may also offer facilities for copying or forwarding the recording to other mailbox owners.

The main advantage of this system is that a user can record a telephone conversation without any special or complicated interactions with a system, and without needing to press any keys or send commands during the call. It is merely necessary to remember and dial the prefix before the destination number.

The embodiment described above can form the basis of a system offering enhanced services to phone users. Whilst CRS can be used in conjunction with an existing voicemail system there may be advantages in implementing a new audio recording and delivery system closely integrated with the programmable switch. Such a system could offer e-mail delivery of recorded conversations to facilitate handling, distribution and storage.

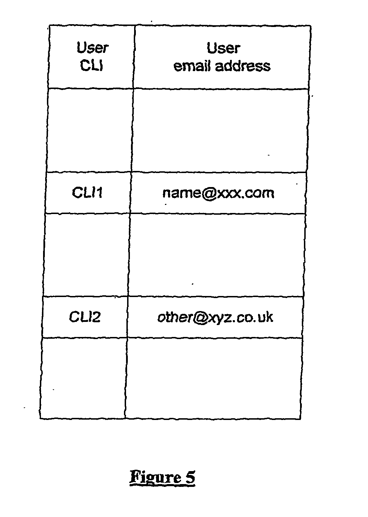

An enhanced implementation is shown in Figure 4. As shown, the caller (user) is on a mobile phone and the called party is on a fixed phone. However, the system may be operated with any combination of fixed and/or mobile phones.

Referring to Figure 4, an incoming call is handled by the fastSSP 1 as described above - onward routed to the destination as for a normal telephone call, but also with the summed output of the audio paths sent via a separate call to an audio recording and delivery system 2.

An audio store 3 in the audio recording and delivery system 2 records the whole of the telephone conversation between the two parties. The user's CLI is passed to a controller 5. The controller 5 extracts the user's e-mail address from a data store 6 and associates it with the audio recording. Either automatically as soon as the recording is completed, or on request at some point in the future, the user may wish to deliver the audio recording via e-mail. In this case, the audio is extracted from the audio store 3 by an audio controller 4 and is delivered to an e-mail gateway 7, then to an e-mail server 8 and hence to the user's PC 9 as an attachment to a standard e-mail.

The details of the e-mail delivery of audio are included in UK patent application Publication No. 2 353 663 A, and so the mechanisms for choice of e-mail delivery are not shown in Figure 4.

The user's e-mail address may be registered in a variety of ways, including manual process involving customer service agent
via a web interface
via an interactive voice service
via SMS messaging
via WAP (Wireless Access Protocol) messaging
via e-mail

The information may be held in the data store 6 in a form as shown in Figure 5.

As an alternative implementation the audio summation function could be provided in the audio recording and delivery system 2 - the fastSSP 1 would provide two separate audio feeds rather than one.

## Claims

1. A telecommunications apparatus for use in a telephone network and operable to establish telecommunications calls between telecommunications terminals connected to said apparatus via the telephone network in response to call requests received from said terminals, said apparatus comprising
a control processor (CRS) operable in response to a call recording request and a terminal identifier received from a calling telecommunications terminal via the telephone network, to establish a telecommunications call over the telephone network between said calling terminal and a called telecommunications terminal identified by said terminal identifier received with said call recording request,
a combiner (X) arranged to receive and to combine telecommunications signals from said calling terminal and telecommunications signals from said called terminal, and
a recording apparatus (VM) operable to record said combined telecommunications signals.

2. A telecommunications apparatus as claimed in claim 1, wherein said recording apparatus is a voicemail system (VM) arranged in use to provide said calling telecommunications terminal with a facility for retrieving said recorded combined telecommunications signals.

3. A telecommunications apparatus as claimed in claims 1 or 2, comprising
a communications processor (5) and a data store (6) arranged to store an address associated with the terminal identifier of said calling telecommunications terminal, at which address said recorded combined telecommunications signals represented as digital data are received, wherein said control processor (5) is operable upon receipt of said call recording request from said calling telecommunications terminal,
to identify said calling terminal from the calling terminal identifier,
to retrieve from said data store (6) said address associated with said calling telecommunications terminal which has been pre-stored, and
to control said communications processor (5) to represent said recorded combined telecommunications signals as digital data signals and to communicate said digital signals to said address.

4. A telecommunications apparatus as claimed in claim 3, wherein said address is an e-mail address or a world wide web address.

5. A telecommunications apparatus as claimed in any preceding claim, wherein said call recording request and said called terminal identifier are numbers, said call recording request being prefixed with said called terminal identifier.

6. A telecommunications apparatus as claimed in any preceding claim, wherein said control processor (CRS) is operable to communicate the terminal identifier of said calling terminal to said called terminal.

## Patentansprüche

1. Telekommunikationsvorrichtung für die Verwendung in einem Telefonnetzwerk, die betreibbar ist, um Telekommunikationsanrufe zwischen Telekommunikationsendstellen, die mit der Vorrichtung über das Telefonnetzwerk verbunden sind, in Antwort auf Anrufanforderungen, die von den Endstellen empfangen wurden, zu errichten, wobei die Vorrichtung aufweist.
einen Steuerprozessor (CRS), der in Antwort auf eine Anrufaufzeichnungsaufforderung und einen Endstellenidentifizierer, der von einer rufenden Telekommunikationsendstelle über das Telefonnetzwerk empfangen wird, betreibbar ist, um einen Telekommunikationsanruf über das Telefonnetzwerk zwischen der anrufenden Endstelle und einer angerufenen Telekommunikationsendstelle, die durch den Endstellenidentifizierer, der mit der Anrufaufzeichnungsanforderung empfangen wurde, identifiziert wird, zu errichten,
einen Kombinierer (X), der angeordnet ist, um die Telekommunikationssignale von der anrufenden Endstelle und Telekommunikationssignale von der angerufenen Endstelle zu empfangen und zu kombinieren, und
eine Aufzeichnungsvorrichtung (VM), die betreibbar ist, um die kombinierten Telekommunikationssignale aufzuzeichnen.

2. Telekommunikationsvorrichtung nach Anspruch 1, bei der die Aufzeichnungsvorrichtung ein Sprachnachrichtsystem (VM) ist, das angeordnet ist, um im Betrieb der anrufenden Telekommunikationsendstelle die Möglichkeit für das Abrufen der aufgezeichneten kombinierten Telekommunikationssignale bereitzustellen.

3. Telekommunikationsvorrichtung nach Anspruch 1 oder 2, die aufweist:
einen Kommunikationsprozessor (5) und einen Datenspeicher (6), die angeordnet sind, um eine Adresse zu speichern, die mit dem Endstellenidentifizierer der anrufenden Telekommunikationsendstelle verknüpft ist, wobei bei dieser Adresse die aufgezeichneten kombinierten Telekommunikationssignale, die durch digitale Daten dargestellt werden, empfangen werden, wobei der Steuerprozessor (5) betreibbar ist, um mit Empfang der Anrufaufzeichnungsanforderung von der anrufenden Telekommunikationsendstelle die anrufende Endstelle von dem anrufenden Endstellenidentifizierer zu identifizieren, von dem Datenspeicher (6) die Adresse abzurufen, die mit der anrufenden Telekommunikationsendstelle verknüpft ist, welche vorher abgespeichert wurde, und den Kommunikationeprozessor (5) zu steuem, um die aufgezeichneten kombinierten Telekommunikationssignale als digitale datensignale darzustellen und die digitalen Signale zu der Adresse zu übertragen.
Telekommunikationsvorrichtung nach Anspruch 3, wobei die Adresse eine E-mail Adresse oder eine Webadresse ist.
Telekommunikationsvorrichtung nach einem der vorherigen Ansprüche, bei der die Anrufaufzeichnungsanforderung und der identifiziener der angerufenen Endstelle Zahlen sind, wobei die Anrufaufzeichnungsanforderung ein Präfix mit dem Identifizierer der angerufenen Endstelle aufweist.
Telekommunikationsvorrichtung nach einem der vorherigen Ansprüche, bei der der Steuerprozessor (CRS) betreibbar ist, um den Endstellenidentifizierer der anrufenden Endstelle der anferufenen Endstelle zu übertragen.

4. Telekommunikationsvorrichtung nach Anspruch 3, wobei die Adresse eine E-Mail Adresse oder eine Webadresse ist.

5. Telekommunikationsvorrichtung nach einem der vorherigen Ansprüche, bei der die Anrufaufzeichnungsanforderung und der identifizierer der angerufenen Endstelle Zahlen sind, wobei die Anrufaufzeichnungsanforderung ein Präfix mit dem Identifizierer der angerufenen Endstelle aufweist.

6. Telekommunikationsvorrichtung nach einem der vorherigen Ansprüche, bei der der Steuerprozessor (CRS) betreibbar ist, um den Endstellenidentifizierer der anrufenden Endstelle der angerufenen Endstelle zu übertragen.

## Revendications

1. Appareil de télécommunications, destiné à être utilisé dans un réseau téléphonique et en mesure d'établir des appels de télécommunications entre des terminaux de télécommunications connectés audit appareil via le réseau téléphonique en réponse à des demandes d'appel reçues desdits terminaux, ledit appareil comprenant:
un processeur de commande (CRS) en mesure, en réponse à une demande d'enregistrement d'appel et un identificateur de terminal reçus d'un terminal de télécommunications appelant via le réseau téléphonique, d'établir un appel de télécommunications sur le réseau téléphonique entre ledit terminal appelant et un terminal de télécommunications appelé identifié par ledit identificateur de terminal reçu avec ladite demande d'enregistrement d'appel;
un combinateur (X) conçu pour recevoir et combiner des signaux de télécommunications provenant dudit terminal appelant et des signaux de télécommunications provenant dudit terminal appelé : et
un appareil d'enregistrement (VM) en mesure d'enregistrer lesdits signaux de télécommunications combinés.

2. Appareil de télécommunications selon la revendication 1, dans lequel ledit appareil d'enregistrement est un système de messagerie vocale (VM) conçu pour être utilisé afin de fournir audit terminal de télécommunications appelant une fonction permettant de récupérer lesdits signaux de télécommunications combinés et enregistrés.

3. Appareil de télécommunications selon la revendication 1 ou 2, comprenant :
un processeur de communications (5) et une mémoire de données (6) conçue pour stocker une adresse, associée à l'identificateur de terminal dudit terminal de télécommunications appelant, à laquelle lesdits signaux de télécommunications combinés et enregistrés sont reçus sous la forme de données numériques, ledit processeur de commande (5) étant en mesure, à réception de ladite demande d'enregistrement d'appel provenant dudit terminal de télécommunications appelant:
d'identifier ledit terminal appelant à partir de l'identificateur de terminal appelant,
de retrouver dans ladite mémoire de données (6) ladite adresse associée audit terminal de télécommunications appelant qui y avait été stockée au préalable, et
de commander ledit processeur de communications (5) afin de représenter lesdits signaux de télécommunications combinés et enregistrés sous la forme de signaux de données numériques et de communiquer lesdits signaux numériques à ladite adresse.

4. Appareil de télécommunications selon la revendication 3, dans lequel ladite adresse est une adresse de courriel ou une adresse web.

5. Appareil de télécommunications selon l'une quelconque des revendications précédentes, dans lequel ladite demande d'enregistrement et ledit identificateur de terminal appelé sont des numéros, ladite demande d'enregistrement d'appel étant préfixée avec ledit identificateur de terminal appelé.

6. Appareil de télécommunications selon l'une quelconque des revendications précédentes, dans lequel ledit processeur de commande (CRS) est en mesure de communiquer l'identificateur de terminal dudit terminal appelant audit terminal appelé.
